## Europäisches Patentamt

## European Patent Office

## Office européen des brevets

(11) Veröffentlichungsnummer: **0 029 902**

A1

# EUROPÄISCHE PATENTANMELDUNG

(21) Anmeldenummer: **80106272.0**

(22) Anmeldetag: **15.10.80**

(51) Int. Cl.³: **E 21 C 29/22**
**B 61 C 11/04, F 16 H 19/00**

(30) Priorität: **29.11.79 PL 219976**

(43) Veröffentlichungstag der Anmeldung:
**10.06.81 Patentblatt 81/23**

(84) Benannte Vertragsstaaten:
**AT DE FR GB**

(71) Anmelder: **Centrum Konstrukcyjno-Technologiczne Maszyn Gorniczych "Komag"**
**ul. Psynska 37**
**Gliwice(PL)**

(72) Erfinder: **Pilarski, Klemens**
**Jasinskiego 5/1**
**Gliwice, ul.(PL)**

(72) Erfinder: **Ulczok, Stefan**
**Szymanowskiego 51**
**Katowice, ul.(PL)**

(72) Erfinder: **Walkiewicz, Stanislaw**
**Tarnogórska 86**
**Gliwice, ul.(PL)**

(72) Erfinder: **Rudnicki, Wincenty**
**Brzozowa 28d/9**
**Gliwice, ul.(PL)**

(74) Vertreter: **Lehn, Werner, Dipl.-Ing. et al,**
**Hoffmann. Eitle & Partner Patentanwälte**
**Arabellastrasse 4**
**D-8000 München 81(DE)**

(54) **Vorrichtung zum Anleiten der Zahnstange eines trumlosen Vorschubgetriebes.**

(57) Diese Vorrichtung dient zum Anleiten der Zahnstange (3) eines trumlosen Vorschubgetriebes zum Zusammenarbeiten mit dem Treibrad (2) der Zugmaschine einer Bergwerksmaschine.

Zwecks Sicherstellung des einwandfreien Zusammenarbeitens des Treibrad-s (2) der Zugmaschine mit der gelenkartig und ausschwenkbar an der Trasse des Förderers befestigten Zahnstange (3) mit Bolzen (8) und oberen und unteren Leisten (11,12) weist ein Führungsstück (1) einen Außengleitschuh (6) und einen Innengleitschuh (7) auf, wobei der Abstand zwischen den Gleitschuhen (6, 7) angenähert gleich dem Durchmesser der Bolzen (8) der Zahnstange (3) und deren Höhe angenähert gleich dem Abstand zwischen der oberen Leiste (11) und der unteren Leiste (12) der Zahnstange (3) ist.

Der Innengleitschuh (7) des Führungsstücks 1 ist unmittelbar an dem Gehäuse (15) der Zugmaschine (16) zu beiden Seiten des Treibrads (2) befestigt. Der Außengleitschuh (6) ist an dem Gehäuse (13) des Führungsstücks 1 befestigt, welches Gehäuse (13) an dem Gehäuse (15) der Zugmaschine (16) mittels Bolzen (17) befestigt ist.

./...

fig.2

fig.4

- 1 -

<u>Vorrichtung zum Anleiten der Zahnstange eines trumlosen Vorschubgetriebes</u>

Die Erfindung betrifft eine Vorrichtung zum Anleiten der Zahnstange mit Bolzen und oberen und unteren Leisten eines trumlosen Vorschubgetriebes zum Zusammenarbeiten mit dem Treibrad der Zugmaschine einer Bergwerksmaschine.

Eine aus der polnischen Patentschrift Nr. 104 524 bekannte Vorrichtung zum Anleiten der Zahnstange eines trumlosen Vorschubgetriebes weist eine Zahnstange auf, bei welcher jedes Zahnstangensegment drehbar und verschiebbar in einem Hälter befestigt ist, der weiter drehbar und verschiebbar in einem Fuß befestigt ist. Die Zahnstangensegmente sind untereinander mittels einer Verschiebungs-Drehverbindung verbunden und weisen eine erzwungene Führung durch Führungsstücke auf, während das Treibrad des Getriebes eine waagerechte Achse aufweist.

Die infolge des Eingriffs der Zähne des Treibrads mit den Zahnstangenbolzen entstehenden Reaktionskräfte werden aus den Bolzen indirekt über Anschlagleisten auf Gleitschuhe des Führungsstücks übertragen.

Die Notwendigkeit, die Zahnstange mit Anschlagleisten zu versehen, führt zu einer Vergrößerung von deren Ausmaßen und von deren Gewicht und erschwert die verfahrenstechnischen Herstellungsprozesse.

Ziel der Erfindung ist es, ein einwandfreies Zusammenarbeiten des Treibrads der Zugmaschine mit der gelenkartig und ausschwenkbar an der Trasse des Förderers befestigten Zahnstange sicherzustellen.

Dieses Ziel wird mit einer Vorrichtung der eingangs beschriebenen Art erfindungsgemäß dadurch erreicht, daß ein Führungsstück mit einem Innengleitschuh und einem Außengleitschuh vorgesehen ist, daß der Abstand zwischen den Gleitschuhen angenähert gleich dem Durchmesser der Bolzen der Zahnstange ist, und daß die Höhe der Gleitschuhe angenähert gleich dem Abstand zwischen der oberen Leiste und der unteren Leiste der Zahnstange ist.

Zweckmäßig weist der Außengleitschuh des Führungsstücks eine Ausnehmung zur Aufnahme der Zahnspitzen des Treibrads auf, wobei die Höhe dieser Ausnehmung kleiner als die Höhe des Außengleitschuhs ist.

Die erfindungsgemäße Vorrichtung ist vorteilhaft derart aufgebaut, daß Innengleitschuhe des Führungsstücks unmittelbar an dem Gehäuse der Zugmaschine zu beiden Seiten des Treibrads und der Außengleitschuh am Gehäuse des Führungsstücks, das an dem Gehäuse der Zugmaschine mittels Bolzen befestigt ist, angebracht sind, wobei sich die durch die Längsachsen der Gleitschuhe bestimmte Ebene angenähert mit der Querebene des Treibrads deckt, und die den Abstand zwischen den Gleitschuhen in zwei Hälften teilende Ebene angenähert tangential zum Treibrad ist.

Weiter ist die erfindungsgemäße Vorrichtung zweckmäßig derart weitergebildet, daß sie an den Enden der Kombine angeordnete, am Kombineschlitten befestigte Außenführungsstücke aufweist, daß die Außenführungsstücke jeweils aus einem Gestell, einer Lasche, einem Innengleitschuh und einem Außengleitschuh bestehen, daß der Abstand zwischen den Gleitschuhen angenähert gleich dem Durchmesser der Bolzen der Zahnstange ist, und daß die Höhe der Gleitschuhe kleiner als der Abstand zwischen der oberen Leiste und der unteren Leiste der Zahnstange ist.

Bei der erfindungsgemäßen Vorrichtung ist somit das Führungsstück mit einem Außen- und einem Innengleitschuh versehen, wobei der Abstand zwischen diesen Gleitschuhen angenähert gleich dem Durchmesser der Zahnstangenbolzen und die Höhe der Gleitschuhe angenähert gleich dem Abstand zwischen der oberen und der unteren Leiste der Zahnstange ist. Der Innengleitschuh des Führungsstücks ist unmittelbar an dem Zugmaschinengehäuse befestigt, und der mit einer Ausnehmung versehene Außengleitschuh ist an dem Führungsstückgehäuse befestigt, wobei dieses Gehäuse an dem Zugmaschinengehäuse mittels Bolzen befestigt ist.

Erfindungsgemäß berühren die Stützflächen der Gleitschuhe unmittelbar die Zahnstangenbolzen, was erlaubt, die sich aus dem Eingriff ergebende Teilkraft, welche quer zur Zahnstange wirkt, direkt durch die an der gegenüberliegenden Seite des Treibzahnrads liegenden Gleitschuhe des Führungsstücks zu übertragen. Dies macht die Verwendung von Anschlagleisten in der Zahnstange überflüssig. Die Herstellung des trumlosen Vorschubgetriebes der Kombine wird unter Berücksichtigung der Tatsache, daß die Länge der Zahnstange für eine Kombine etwa 200 m beträgt, beträchtlich billiger.

Die Erfindung ist im folgenden an einem Ausführungsbeispiel näher erläutert. In der Zeichnung zeigen

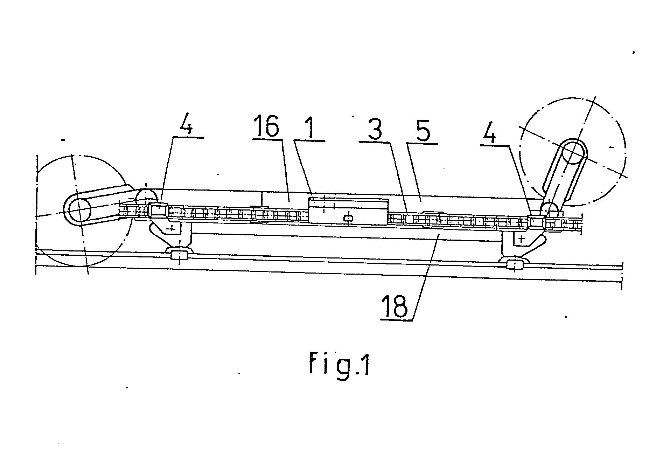

Fig. 1    die Lage der Bauelemente der erfindungsgemäßen Vorrichtung auf einer Kombine,

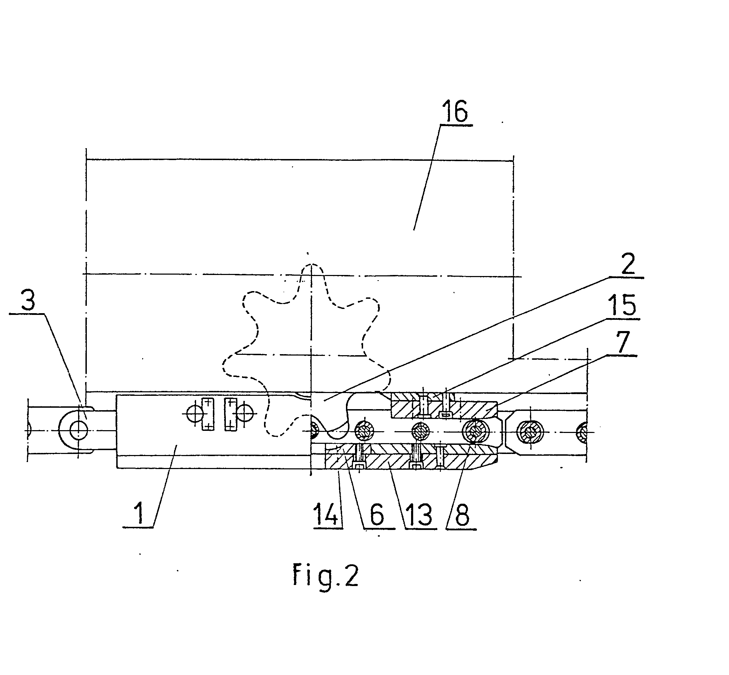

Fig. 2    eine Halb-Draufsicht des mittleren Bauelements der erfindungsgemäßen Vorrichtung und den Halbschnitt dieses Bauelements im Zusammenbau mit der Zahnstange,

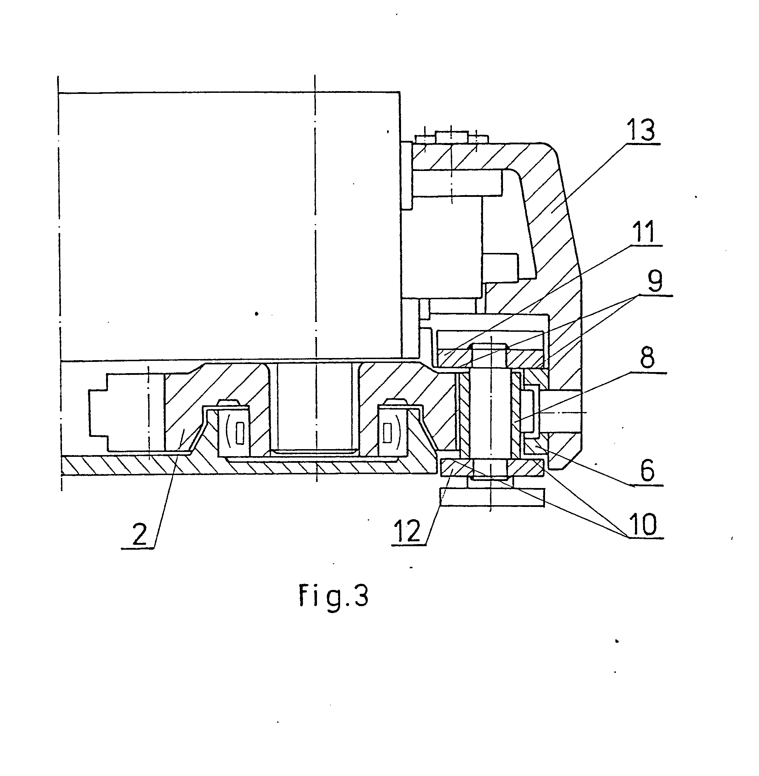

Fig. 3    einen Querschnitt des mittleren Bauelements der erfindungsgemäßen Vorrichtung und des Treibrads der Zugmaschine,

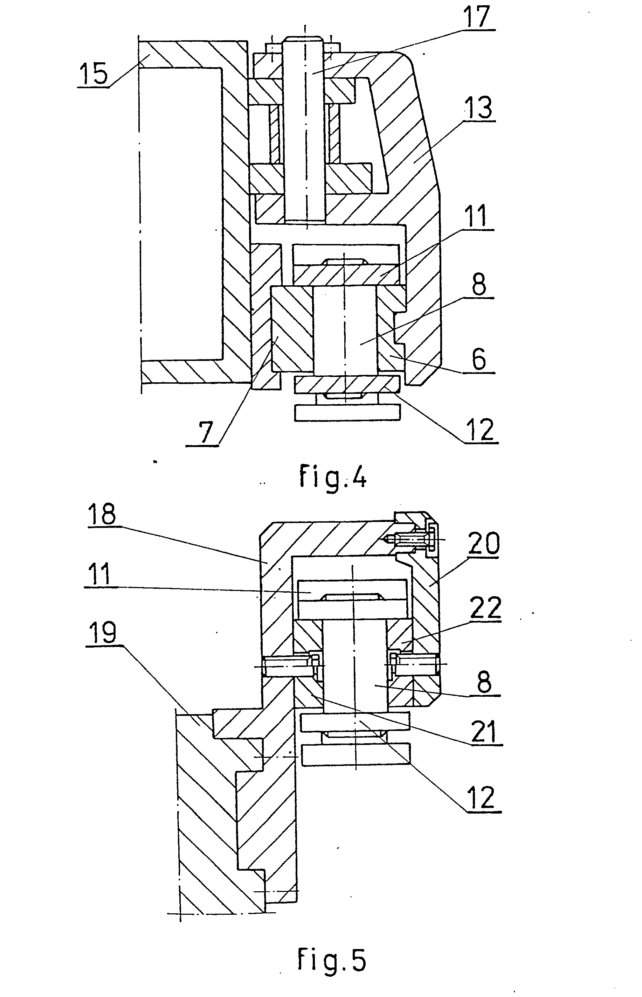

Fig. 4    einen Querschnitt des mittleren Bauelements der erfindungsgemäßen Vorrichtung an der Stelle dessen Befestigung an dem Zugmaschinengehäuse, und

Fig. 5    einen Querschnitt eines äußeren Bauelements der erfindungsgemäßen Vorrichtung.

Das grundsätzliche Bauelement der erfindungsgemäßen Vorrichtung zum Anleiten der Zahnstange des trumlosen Vorschubgetriebes ist das mittlere Führungsstück 1, das ein einwandfreies Zusammenarbeiten des Treibrads 2 mit der Zahnstange 3 sichert. Die Außenführungsstücke 4 dienen zum Voranleiten der Zahnstange 3 und zur Beschränkung deren Querbewegungen innerhalb der Kombine 5, weshalb sie an den Enden der Kombine 5 angeordnet sind. Das mittlere Führungsstück 1 weist einen Außengleitschuh 6 und zwei Innengleitschuhe 7 auf, welche unmittelbar mit den Bolzen 8 der Zahnstange 3 zusammenarbeiten und die Zahnstange 3 im richtigen Abstand von dem Treibrad 2 halten. Die Gleitschuhe 6 und 7 des Führungsstücks 1 arbeiten auch mit den Innenflächen 9 und 10 von oberen und unteren Leisten 11 und 12 der Zahnstange 3 zusammen und halten die Zahnstange 3 in einer Lage, welche das Eintreten der Zähne des Treibrads 2 zwischen die Leisten 11 und 12 der Zahnstange 3 ermöglicht, wobei die Höhe der Gleitschuhe 6 und 7 des Führungsstücks 1 kleiner als der Abstand der Leisten 11 und 12 und größer als die Zahnbreite des Treibrads 2 ist. Dies verhindert ein Reiben der Frontflächen der Zähne des Treibrads 2 an den Leisten 11 und 12 der Zahnstange 3.

Der Außengleitschuh 6 ist mit dem Gehäuse 13 des Führungsstücks 1 mittels Schrauben und Stiften verbunden, um einen einfachen Austausch im Falle eines Verschleißes der Stützflächen zu ermöglichen. Der Außengleitschuh 6 weist in seinem mittleren Teil eine Ausnehmung 14 zur Aufnahme der Zahnspitzen des Treibrads 2 auf, wobei die Höhe der Ausnehmung 14 kleiner als die Höhe des Innengleitschuhs 6 ist. Damit stützen sich die Bolzen 8 auch im Bereich der Verzahnung des Treibrads 2 gegen den Außengleitschuh 6 ab. Mit Rücksicht auf eine Vereinfachung des Herstellungsprozesses ist der Außengleitschuh 6 vorteilhaft in drei Teile zu trennen.

Die Innengleitschuhe 7 sind unmittelbar an dem Gehäuse 15 der Zugmaschine 16 zu beiden Seiten des Treibrads 2 angeschraubt. Das Gehäuse 13 des Führungsstücks 1 ist an dem Gehäuse 15 der Zugmaschine 16 mittels Bolzen 17 befestigt.

Die Außenführungsstücke 4 sind mit ihren Gestellen 18 am Kombineschlitten 19 befestigt. Jedes Führungsstück 4 besteht aus dem Gestell 18 und der Lasche 20 sowie einem Innengleitschuh 21 des Außenführungsstücks 4 und einem Außengleitschuh 22 des Außenführungsstücks 4, welche mit den Bolzen 8 und den Leisten 11 und 12 der Zahnstange 3 zusammenarbeiten. Die Höhe der Gleitschuhe 21 und 22 ist kleiner als der Abstand zwischen den Leisten 11 und 12.

Patentansprüche:

1. Vorrichtung zum Anleiten der Zahnstange (3) mit Bolzen (8) und oberen und unteren Leisten (11, 12) eines trumlosen Vorschubgetriebes zum Zusammenarbeiten mit dem Treibrad (2) der Zugmaschine einer Bergwerksmaschine, dadurch gekennzeichnet, daß ein Führungsstück (1) mit einem Innengleitschuh (7) und einem Außengleitschuh (6) vorgesehen ist, daß der Abstand zwischen den Gleitschuhen (6, 7) angenähert gleich dem Durchmesser der Bolzen (8) der Zahnstange (3) ist, und daß die Höhe der Gleitschuhe (6, 7) angenähert gleich dem Abstand zwischen der oberen Leiste (11) und der unteren Leiste (12) der Zahnstange (3) ist.

2. Vorrichtung nach Anspruch 1, dadurch gekennzeichnet, daß der Außengleitschuh (6) des Führungsstücks eine Ausnehmung (14) zur Aufnahme der Zahnspitzen des Treibrads (2) aufweist, wobei die Höhe dieser Ausnehmung kleiner als die Höhe des Außengleitschuhs (6) ist.

3. Vorrichtung nach Anspruch 1, dadurch gekennzeichnet, daß Innengleitschuhe (7) des Führungsstücks (1) unmittelbar an dem Gehäuse (15) der Zugmaschine (16) zu beiden Seiten des Treibrads (2) und der Außengleitschuh (6) am Gehäuse (13) des Führungsstücks (1), das an dem Gehäuse (15) der Zugmaschine (16) mittels Bolzen (17) befestigt ist, angebracht sind, wobei sich die durch die Längsachsen der Gleitschuhe (6, 7) bestimmte Ebene angenähert mit der Querebene des Treibrads (2) deckt, und die den Abstand zwischen den Gleitschuhen (6, 7) in zwei Hälften teilende Ebene angenähert tangential zum Treibrad (2) ist.

4. Vorrichtung nach Anspruch 1, dadurch gekennzeichnet, daß sie an den Enden der Kombine (5) angeordnete, am Kombineschlitten (19) befestigte Außenführungsstücke (4) aufweist, daß die Außenführungsstücke (4) jeweils aus einem Gestell (18), einer Lasche (20), einem Innengleitschuh (21) und einem Außengleitschuh (22) bestehen, daß der Abstand zwischen den Gleitschuhen (21, 22) angenähert gleich dem Durchmesser der Bolzen (8) der Zahnstange (3) ist, und daß die Höhe der Gleitschuhe (21, 22) kleiner als der Abstand zwischen der oberen Leiste (11) und der unteren Leiste (12) der Zahnstange (3) ist.

Fig.1

Fig.2

0029902

Fig.3

0029902

Fig.4

Fig.5

0029902

| | | |
|---|---|---|
| Europäisches Patentamt | **EUROPÄISCHER RECHERCHENBERICHT** | Nummer der Anmeldung<br>EP 80 10 6272 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 635 434</u> (COAL INDUSTRY) <br> * Seite 4, Zeile 24 bis Seite 6, Zeile 10; Figuren 1-3 * <br><br> -- <br><br> <u>DE - A - 2 543 510</u> (COAL INDUSTRY) <br> * Seite 5, Zeile 20 bis Seite 6, Zeile 28; Seite 9, Zeilen 6-17; Seite 11, Zeile 26 bis Seite 12, Zeile 21; Seite 13, Zeilen 10-18; Seite 14, Zeilen 6-11; Seite 15, Zeile 5 bis Seite 16, Zeile 1; Figuren 1-5,10,12,13 * <br><br> -- <br><br> <u>DE - A - 2 646 291</u> (EICKHOFF) <br> * Seite 7, Zeile 15 bis Seite 8, Zeile 10; Figuren 1,3,6 * <br><br> -- <br><br> <u>DE - A - 2 552 085</u> (EICKHOFF) <br> * Seite 7, Zeilen 1-7; Seite 9, Zeilen 1-9; Figuren 1,4,5 * <br><br> -- <br><br> <u>DE - A - 2 709 153</u> (EICKHOFF) <br> * Seite 9, Zeile 28 bis Seite 10, Zeile 1 * <br><br> -- <br><br> APD   <u>PL - A - 104 524</u> (RIJNIK) <br><br> ------ | 1,4 <br><br><br><br> 1 <br><br><br><br><br><br><br><br><br><br><br><br> 1,3 <br><br><br><br> 1-3 <br><br><br><br> 1 |

**KLASSIFIKATION DER ANMELDUNG (Int. Cl.³)**

E 21 C 29/22
B 61 C 11/04
F 16 H 19/00

**RECHERCHIERTE SACHGEBIETE (Int. Cl.³)**

E 21 C
B 61 B
B 61 C
E 01 B
F 16 H

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-03-1981 | HAKIN |

EPA form 1503.1   06.78